Europäisches Patentamt

(19) European Patent Office

Office européen des brevets

(11) Publication number: **0 062 246**
**B1**

(12) EUROPEAN PATENT SPECIFICATION

(45) Date of publication of patent specification: **09.10.85**

(51) Int. Cl.⁴: **B 60 T 8/30, B 60 T 8/18**

(21) Application number: **82102492.4**

(22) Date of filing: **25.03.82**

(54) Braking system for motorvehicles.

(30) Priority: **03.04.81 IT 6746681**

(43) Date of publication of application:
**13.10.82 Bulletin 82/41**

(45) Publication of the grant of the patent:
**09.10.85 Bulletin 85/41**

(84) Designated Contracting States:
**DE FR GB SE**

(56) References cited:
**FR-A-2 391 096**
**GB-A-1 251 832**
**GB-A-1 372 398**
**GB-A-1 581 594**
**GB-A-2 035 487**
**GB-A-2 043 189**
**GB-A-2 049 080**

(73) Proprietor: **CORINT S.r.l.**
**Strada degli Alberoni 18/2**
**I-10133 Torino (IT)**

(72) Inventor: **Cordiano, Ettore**
**Strada degli Alberoni 18/2**
**I - 10133 Torino (IT)**

(74) Representative: **Jacobacci, Filippo et al**
**c/o JACOBACCI-CASETTA & PERANI S.n.c. Via Alfieri, 17**
**I-10121 Torino (IT)**

Courier Press, Leamington Spa, England.

**Description**

The present invention relates to a braking system for motor vehicles of the type comprising:
a master cylinder and brakes on every front and rear wheel;
a proportioning device for varying the braking torque distribution between front and rear wheels;
an actuator which controls said proportioning device;
a hydraulic circuit which connects the master cylinder, the brakes and the proportioning device; and
a control circuit of said actuator including: sensor means of wheels load and of pressures in the hydraulic circuit, and an electronic control unit.

It is known that in a motor vehicle braking system, to avoid vehicle side skid and adherence losses, brakes must bring the rear wheels to the slip limit after the front wheels whatever the load and adherence conditions are. This result could be obtained by simply increasing front-to-rear braking torque ratio, so as to avoid rear wheels skidding when the vehicle is empty. However, if the torque ratio were to remain constant, at full load the utilization of rear adherent weight and decelerations would be very poor.

To solve the problem, those devices are useful, which modify the braking torque ratio depending on the weight distribution between front and rear wheels or those devices which are capable of preventing rear wheels skidding under every possible condition.

A braking system of the kind indicated at the beginning of the present description is known from GB—A—2043189. Such known system includes a plurality of valves, each connected to a wheel brake cylinder and arranged to modulate the pressure in each said cylinder independently, as a function of vehicle longitudinal and transversal accelerations. The main drawback of this known system is that it is quite complicated and costly.

Various other devices having pressure regulating solenoid valves arranged to vary the braking torque distribution between front and rear wheels and/or to prevent rear wheels skidding are known for example from the following documents:

— GB—A—2035487, relating to a pneumatic or electro-pneumatic braking system for a rail vehicle including a plurality of solenoid valves and pressure-voltage transducers and a micro-processor which controls the various braking functions;
— GB—A—2049080, relating to a braking system wherein a proportioning valve, which modulates the rear brake pressure, is responsive to control means responsive to the angular decelerations of rear wheels;
— GB—A—1581594, relating to a pneumatic braking system, wherein a control circuit including a micro-processor regulates brake cylinder pressure by means of at least one three-position valve, according to the pressure established by the brake valve;
— GB—A—1372398, relating to an anti-skid device;
— GB—A—1251832, relating to another anti-skid device.

All the above known systems are rather complex and expensive and consequently they can be adopted only on heavy industrial vehicles or on luxury cars.

Systems are also known and used having proportioning valves which are mechanically linked to rear wheels, so as to regulate rear circuit brake pressure according to the wheels-to-body relative position; such systems give doubtless advantages in comparison with devices providing a constant brake pressure distribution, but they are difficult to be adjusted on the assembly line, and are sensitive to suspension 'setting during the use of the vehicle. Furthermore, they do not succeed in proportioning exactly the braking distribution as a function of the rear wheels load.

The object of this invention is to provide a braking system which overcomes the above mentioned problems and which in particular enables to totally exploit the adherent weight and to attain deceleration values practically equal to those permitted by the actual tyres/ground adherence conditions, without the complexity and costs of the electronic systems above-mentioned.

In view of achieving the above object, the invention provides a braking system of the kind indicated at the beginning of the present description, characterised in that said electronic control unit is a micro-processor and in that the system further comprises means for automatically activating the wheels load sensor means, only when the vehicle is in a stationary condition in order to signal to the micro-processor and make it memorize the vehicle load conditions, said micro-processor being arranged to control said actuator so as to modulate during braking the rear circuit pressure $p_P$ as a function of front circuit pressure $p_A$ in such a way that $p_P$ is always slightly lower than the value calculated according to the mathematical expression, memorized in the micro-processor:

$$p_P=\sqrt{(p_A\alpha/\beta+Qb/2H\beta)^2+p_A\alpha/\beta(Qa/H-p_A\alpha/\beta)}-(p_A\alpha/\beta+Qb/2H\beta)$$

where $Q$ is the vehicle total weight, a and b are the horizontal distances of the center of gravity of the vehicle from the front and rear wheel axes respectively, H is the height above the ground of said center of gravity, $\alpha$ and $\beta$ are brakes coefficients; $Q$, a, b being calculated and memorised by the micro-processor on the basis of the output signals from the load sensor in the stationary condition of the vehicle.

Since during braking the micro-processor has to modulate rear pressure $p_P$ as a function of one

2

variable parameter only, i.e. $p_A$, the electronic control system is greatly simplified and, therefore, less expensive and, for the same reason, no risk exists of unstability as in the case of the aforementioned devices where the parameters, according to which the micro-processor modulates pressure $p_P$, are continuously varying.

Further advantages of the invention will become evident from the following description, with reference to the accompanying drawings where:

Fig. 1 illustrates the forces acting on the vehicle during braking.

Fig. 2 shows a control diagram of the braking system,

Fig. 3 is the complete system diagram,

Fig. 4 illustrates a proportioning device controlled by an electromagnet,

Fig. 5 is a simplified scheme of the system with only one load sensor.

In order to explain the working principle of the system, some considerations are necessary on the forces acting on the vehicle during braking.

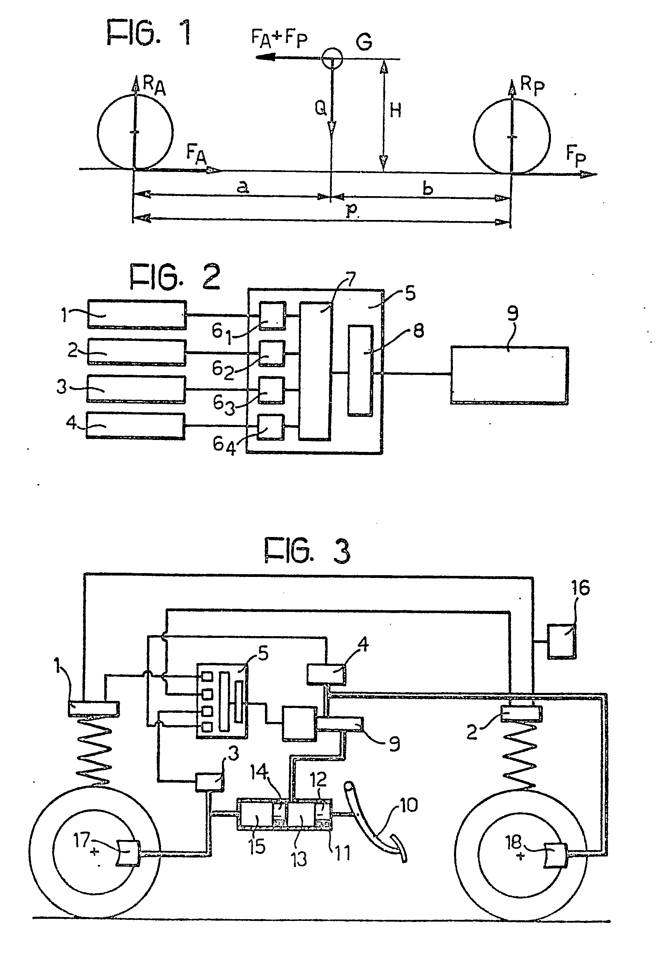

With reference to Fig. 1:

G indicates the vehicle center of gravity,

a, b are the horizontal distances of G from the front and rear wheel axes respectively,

H is the height of G above the ground (which is assumed to be constant),

$R_A$, $R_P$ are the reaction forces of the ground against the front and rear wheels,

$F_A$, $F_P$ are the braking forces on wheel periphery, equal and opposite to the inertia forces whose resultant is applied in the center of gravity,

Q is the total vehicle weight,

p is the distance between front and rear wheel axes.

From the balance equations for the forces applied to the vehicle, the values of $R_A$ and $R_P$ can be calculated:

$$(1) \qquad R_A = Q \cdot b/p + (F_A + F_P) \cdot H/p$$

$$R_P = Q \cdot a/p - (F_A + F_P) \cdot H/p$$

These equations indicate how ground reaction vary as a function of braking efforts.

To obtain that front and rear wheels arrive simultaneously at slip limit as the braking efforts increase, it is necessary that:

$$(2) \qquad F_A = f \cdot R_A \text{ and } F_P = f \cdot R_P \text{ or}$$

$$(3) \qquad F_P = F_A \cdot R_P/R_A$$

f being the tyres/ground adherence coefficient.

From this expression it is apparent that, if, when the front braking effort increases, the rear braking effort increases in such a way that $F_P$ remains equal or slightly lower than the value given by (3), then the result is obtained of having the maximum deceleration permitted by the f values, without rear wheels anticipated locking-up.

In this case, obviously, it is necessary to measure instant by instant the values of $F_A$ and $R_P$ forces to be inserted into equations (3).

A second method to control the braking distribution is the following: if (2) is inserted into (1), it results:

$$(4) \qquad F_P = \sqrt{(F_A + Qb/2H)^2 + F_A(Qa/H - F_A)} - (F_A + Qb/2H)$$

Expression (4) has the same meaning as (3): it gives the condition that $F_P$ must satisfy, when $F_A$ varies, in order to maximize the decelerations and to avoid anticipated rear wheels skidding. It differs from the (3) inasmuch as it is not based on the instantaneous $R_A$ and $R_P$ values, but on the values of a, b that are recorded one time only, for the specific load conditions.

The object of this invention is to provide a system which ensures that equations (3) and (4) are satisfied in every instant and for any load condition. The system operates directly on front and rear circuit pressures $p_A$ and $p_P$, that are proportional to $F_A$ and $F_P$ tangential forces. If $\alpha$ and $\beta$ are the proportionality factors, that is

$$\alpha = F_A/p_A \text{ and } \beta = F_P/p_P$$

(3) and (4) become

$$(3') \qquad p_P = \alpha/\beta \cdot p_A \cdot R_P/R_A$$

$$(4') \qquad p_P \sqrt{(\alpha/\beta \cdot p_A + Qb/2HB)^2 + \alpha/\beta \cdot p_A(Qa/H - \alpha/\beta \cdot p_A)} - (\alpha/\beta \cdot p_A + Qb/2H\beta)$$

3

The meaning of (3') and (4') is identical with that of (3) and (4), namely they give the values of $p_P$ as a function of $p_A$ by which front and rear wheels slip simultaneously for any adherence condition. Therefore, if $p_P$ is always lower than the value given by the two relations, the anticipated locking-up of rear wheels is always avoided.

The micro-processor could be programmed in such a way as to follow the law (3') and, through the proportioning valve, as to modulate pressure $p_P$ in relations to the instantaneous $R_A$ and $R_P$ forces. This would involve a big complexity in the electronic circuit because, during braking, it should continually and extremely quickly read $p_A$ and modulate $p_P$ in relation to the signals of $R_A$ and $R_P$ sensors, while $R_A$ and $R_P$ vary as $p_P$ is modulated. Unstability conditions could easily occur.

The system becomes simpler and is stable if, conversely, expression (4') is used, in which case the values of a, b, H and Q, that are constant during braking, are inserted into the computer memory with stationary vehicle and the computer has to modulate $p_P$ taking into account the variable $p_A$ only.

Figs. 2 and 3 illustrate in its general lines the braking system scheme according to the invention.

With reference to the same figures, 1 and 2 indicate the sensors that feel the weight on the two axles. they can be load cells that measure the forces acting on the suspensions elastic elements, as shown in Fig. 3, or indicators of the wheel position in respect of the body. From the position indication, being the suspension load/deflections diagrams known, the loads on the wheels are determined.

Sensors 3 and 4 measure the front and rear pressures $p_A$ and $p_P$ and they can be either permanently active or be activated only during braking, for instance through the same switch that inserts the stop lights.

The control unit includes:

— interfaces $6_1$, $6_2$, $6_3$, $6_4$ that translate the sensors signals into a language intelligible for the micro-processor;
— micro-processor 7;
— power interface 8, which receives the output signals from the micro-processor and transforms them into power variations for the actuator.

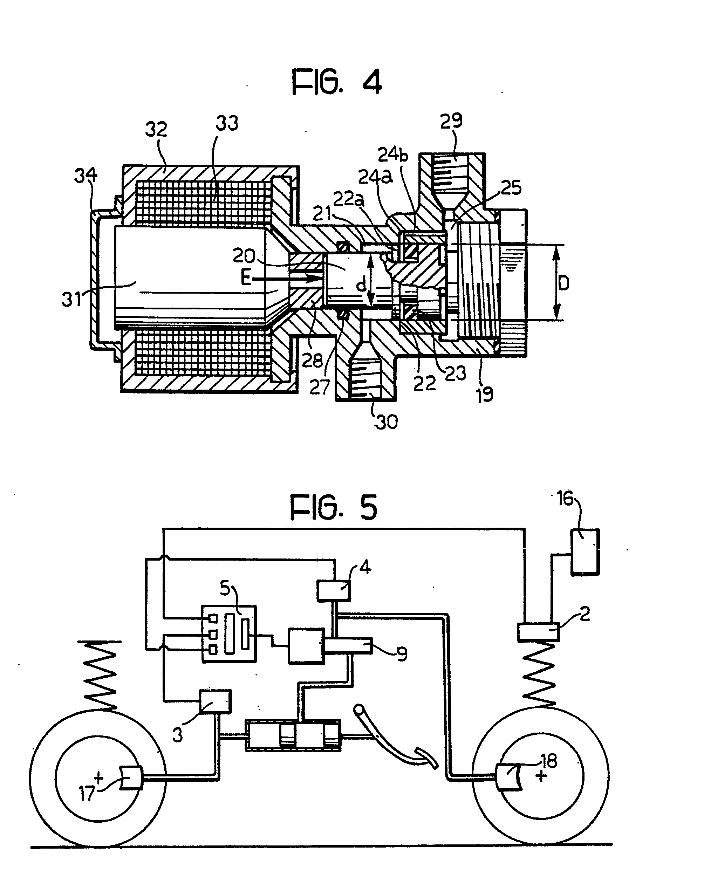

By reference numeral 9 the proportioning device actuator is indicated, of the type shown in Fig. 4, that operates the pressure modulation, controlled by micro-processor 7.

Sensors 3 and 4, control unit 5 and the proportioning device are preferably located in the engine compartment of the vehicle near the master cylinder 11.

The operation of the system is as follows.

During braking, the micro-processor modulates pressure $p_P$ according to relation (4') stored in its memory, according to signals $p_A$ and $p_P$ that are fed continuously by sensors 3 and 4, and according to the values of a, b and Q inserted in its memory through sensors 1 and 2 before the vehicle starts.

To this purpose a device 16 activates sensors 1 and 2 when the vehicle is stationary or when at least one of the doors is open.

Fig. 4 illustrates, by way of non-limiting example, a possible embodiment of the proportioning device with its actuator. It consists of a proportioning valve of a conventional type provided with an electromagnet for pressure modulation in response to the input signal received from the micro-processor.

With reference to the same Fig. 4, a plunger 20, having two portions having different diameters D and d is slidably mounted in a cylinder which has also two portions having different diameters, and is provided with a stationary sealing ring 27. A floating sealing ring 23 separates a high pressure chamber 21 from a low pressure chamber 25. The oil arrives at the chamber 21 through a hole 30 from the master cylinder at $p_A$ pressure, and from the chamber 25, through a hole 29, the oil goes out at $p_P$ pressure and it is sent to the rear brakes.

An electromagnet 15 provides a thrust E against the plunger 20 by means of a winding 33, contained in a ferromagnetic material housing 32. The housing is closed by a cover 34.

The device operates as follows. The oil at $p_A$ pressure, which arrives into the chamber 21, passes through circumferential slots $24_a$ and channel $24_b$ into the chamber 25 and therefrom it goes to the rear brakes. When $p_A$ increase up to the value where the thrust on d diameter section is equivalent to the electromagnet E force, the plunger moves toward the electromagnet until sealing ring 23 closes slots $24_a$. A $p_A$ increases furthermore, also the thrust on the annular section $\pi/4(D^2-d^2)$ increases and the plunger retracts slightly and opens again momentarily slots $24_a$. Consequently pressure $p_P$ increases again until the balance between $p_A$, $p_P$ and E is attained and the plunger closes again slots $24_a$.

By realising the brake pedal, and thus eliminating pressure $p_A$ in chamber 21, pressure $p_P$ pushes ring 23 leftwards in the plunger groove and thus the oil from the rear circuit can flow back in the master cylinder, passing through the ring and the groove walls, and slots $22_a$ cut in the rim 22 of the same plunger. The relationship between $p_A$ and $p_P$ is obtained by considering the equilibrium of the plunger under the different forces acting on it

$$\pi/4 \cdot D^2 \cdot p_P = \pi/4 \cdot (D^2-d^2)p_A + E$$

$$p_P = P_A(D^2-d^2)/D^2 - E \cdot 4/\pi D^2$$

4

By suitably dimensioning the proportioning device and the actuator, the ratio between $p_A$ and $p_P$ can be varied in a sufficiently wide range by modulating the excitation current of the electromagnet, that is the thrust E. For example, by choosing D and d so that is

$$\pi . D^2/4 = 1 \text{ and } \pi/4 . (D^2 - d^2) = 1/3 \text{ cm}^2$$

$p_P$ can vary: from $p_P = p_A/3$ for E=0, to $p_P = p_A$ for $E \geqslant p_A . \pi . d^2/4$.

As the valve works at fixed point, its force E is practically proportional to the current in its winding, thus easy to modulate.

The proposed system can also be utilized, with small modifications, for further functions that in a normal brake system can be obtained only by adding some other rather expensive devices. For example, it can give a signal, through a suitable warning light, that one of the hydraulic circuits is defective. The Laws of some countries require these functions and these call for the addition in a normal braking system of a device which feels front and rear pressures and enters into action when only one of these pressures is zero, that is when one of the circuits has failed.

By this invention it is sufficient to program the micro-processor in such a way that, when one of the pressure, $p_A$ or $p_P$, is zero while the other is different from zero, a warning light goes on.

Moreover, in the vehicle having conventional proportioning valves it happens that, if the front circuit fails, since the proportioning valve continues to reduce the rear pressure with respect to the master cylinder pressure, the brake pedal effort for the emergency braking becomes so high that the system often does not meet the Standards for the braking with only one circuit operative. To avoid this trouble it is necessary, in the critical cases, to add to the traditional proportioning valve a device which senses the front pressure and, when this is zero, by-passes the valve thus neutralizing its effect.

That requires the addition, beside said device, of a pipe 2 to 3 meters long, which brings the front brake oil up to the proportioning valve, which is located above the rear suspension. This, obviously, means higher costs and risks of failures that, on the contrary, are completely avoided with the proposed system. In the case of the present invention, it is sufficient to program the micro-computer in such a way that, when $p_A$ is zero while $p_P$ is different fron zero, the current sent to the electromagnet is at its highest value and the proportioning device reducing effect is thus annulled.

The system of Fig. 3 can be simplified if a lower but satisfactory sensitivity to vehicle load variation is accepted.

In fact, the variations of $R_A$ and $R_P$ of expression (3') and of a, b, Q of (4') can be calculated by the micro-processor according to the variation of the rear load only. In such case a really negligible error is made in the calculation of pressure $p_P = f (p_A)$ and, anyway, the same happens in the commonly used brake systems with traditional proportioning valve, that are connected only to the rear axle. Moreover, in these systems there are other errors in the modulation of the pressure versus deceleration, which errors are eliminated by this invention.

In the simplified diagram illustrated in Fig. 5 front wheel load sensor 1 is missing and there is only rear sensor 2.

Moreover, even pressure $p_P$ sensor can be eliminated and the pressure modulation can be obtained by varying the electromagnet excitation without the feedback given by pressure $p_P$ sensor 4 of diagram Figs. 3 and 5.

As already said in the preceding description, load sensor 1 and 2 can consist of sensors of the position of the wheels relative to vehicle body. This invention permits to greatly improve the wheels position sensors, if they are used.

In the traditional brake systems with proportional valve, in fact, there is the severe problem of the necessity of adjusting with the utmost care the length of the connection linkage between wheels and valve in order that this works at the right pressure.

Moreover, since a setting of the suspensions elastic elements always occurs with the time, the adjustment must be repeated, and not once only, in order to cope with the new wheels position. If these controls and adjustments are not performed, braking can be dangerously affected.

By the invention herein described this problem can be easily solved. It is sufficient, for instance, to provide a device which can be actuated by the driver, with the vehicle in an unloaded and stationary condition, and to program the micro-processor to store the signal of the position sensor in this instant. The micro-processor will then take that position as the one of unloaded vehicle and will utilize the variations versus it to calculate the load variations. Therefore, the initial exact adjustment of the proportioning device is not necessary, and this very simple operation can be easily repeated periodically by the driver himself, thus completely eliminating the effect of suspension setting. Some simple precautions can be taken in order to avoid that the driver can inadvertently activate the adjustment system when the vehicle is loaded. For instance, said system could be a switch that closes the position sensor circuit only when the starter is on and let the micro-processor store the position.

Furthermore, the proportioning device actuator can obviously be a means different from an electromagnet, for example it could be an electric step-by-step engine or any other equivalent device.

As last observation, the system, as it is proposed, gives obviously an error in the evaluation of the wheels load distribution on long trips made without stops. This is because the weight reduction due to the consumed fuel is not signalled to the micro-processor. In order to correct the data stored in the micro-processor, it would be necessary to stop now and then or to open some of the doors.

However, the fuel weight variations are not so important as to create dangerous errors. Anyway the errors can be completely eliminated by programming the micro-processor in such a way that it senses also the signal of the fuel level gauge in the tank, stores this signal with stationary vehicle, together with the load sensors signals and then, during the trip, calculates the weight variations on the basis of the fuel level variations. Obviously, the fuel level gauge must be continually connected with the micro-processor during the trip.

**Claims**

1. Braking system for motorvehicles of the type comprising:

— a master cylinder and brakes on every front and rear wheel;
— a proportioning device for varying the braking torques distribution between front and rear wheels;
— an actuator which controls said proportioning device;
— a hydraulic circuit which connects the master cylinder, the brakes and the proportioning device;
— a control circuit of said proportioning device actuator including: sensor means of wheels load and of pressures in the hydraulic circuit, and an electronic control unit, characterised in that said electronic control unit is a micro-processor and in that the system further comprises means for automatically activating the wheel load sensor means only when the vehicle is in a stationary condition, in order to signal to the micro-processor and make it memorize the vehicle load conditions, said micro-processor being arranged to control said actuator so as to modulate during braking the rear circuit pressure $p_P$ as a function of front pressure $p_A$ in such a way that $p_P$ is always slightly lower than the value calculated according to the mathematical expression, memorized in the micro-processor

$$p_P = \sqrt{(p_A\alpha/\beta + Qb/2H\beta)^2 + p_A\alpha/\beta \cdot (Qa/H - p_A\alpha/\beta)} - (p_A\alpha/\beta + Qb/2H\beta)$$

where Q is the vehicle total weight, a and b are the horizontal distances of the center of gravity of the vehicle from the front and rear wheel axes respectively, H is the height above the ground of said center of gravity, $\alpha$ and $\beta$ are brakes coefficients, Q, a, b, being calculated and memorized by the micro-processor on the basis of load sensors signals in the stationary condition of the vehicle.

2. Braking system for motorvehicles as in claim 1 characterized in that the load on the wheels is deducted by the micro-processor on the basis of the signal of only one load sensor on the rear wheels.

3. Braking system for motorvehicles as in claims 1 and 2, characterised in that the micro-processor is programmed in such a way as to signal to the driver if one of the hydraulic circuits of the brakes is defective, deducing this condition from the fact that only one of the pressures, $p_A$ or $p_P$, is substantially zero.

4. Braking system for motorvehicles as in claims from 1 to 3, characterized in that the micro-processor reduces to a minimum pressure $p_P$ reduction effect of the proportioning device, in case the front brakes hydraulic circuit fails, that is when $p_A$ is substantially zero while $p_P$ is different from zero.

5. Braking system for motorvehicles as in claims from 1 to 4, characterised in that the load sensors consist of sensors of wheels position relative to vehicle body, from whose information the micro-processor calculates the load on the wheels, means being provided through which the driver can make the no-load wheels position memorised by the micro-processor.

6. Braking system for motorvehicles as in claims from 1 to 5, characterized in that the micro-processor senses also the signal of the fuel level gauge in the fuel reservoir of the motor-vehicle, stores the signal in the stationary condition of the vehicle, together with the load sensors signals, and during the travel calculates the weight variations, due to fuel consumption, on the basis of fuel level variations and, accordingly, modifies the memorized parameters a, b and Q.

**Revendications**

1. Système de freinage pour véhicules à moteur, du type comprenant:

— un maître-cylindre et des freins sur chacune des roues avant et arrière;
— un dispositif de réglage pour faire varier la distribution des couples de freinage entre les roues avant et les roues arrière;
— un élément d'actionnement qui commande ledit dispositif de réglage;
— un circuit hydraulique raccordant le maître-cylindre, les freins et le dispositif de réglage;
— un dispositif de commande dudit élément d'actionnement du dispositif de réglage, comprenant des moyens de détection de la charge des roues et de pressions régnant dans le circuit hydraulique, ainsi qu'un dispositif électronique de commande, caractérisé par le fait que ledit dispositif électronique de commande est un microprocesseur; et par le fait que le système comporte en outre des moyens pour activer automatiquement les moyens détecteurs de la charge des roues seulement lorsque le véhicule se trouve dans une condition stationnaire, de façon à délivrer des signaux au microprocesseur et à lui faire mémoriser les conditions de charge du véhicule, ledit microprocesseur étant conçu pour commander ledit élément d'actionnement afin, lors du freinage, de moduler la pression $p_P$ du circuit arrière en fonction de la pression $p_A$ à l'avant, de telle sorte que $p_P$ soit toujours légèrement inférieure à la valeur calculée d'après l'expression mathématique, mémorisée dans le microprocesseur,

$$p_P = \sqrt{(p_A\alpha/\beta + Qb/2H\beta)^2 + p_A\alpha/\beta \cdot (Qa/H - p_A\alpha/\beta)} - (p_A\alpha/\beta + Qb/2H\beta),$$

dans laquelle Q représente le poids total du véhicule, *a* et *b* sont les distances horizontales séparant le centre de gravité du véhicule des axes respectifs des roues avant et arrière, H est la hauteur dudit centre de gravité au-dessus du sol, α et β sont des coefficients de freinage, Q, *a* et *b* étant calculés et mémorisés par le microprocesseur sur la base de signaux des détecteurs de charge dans la condition stationnaire du véhicule.

2. Système de freinage pour véhicules à moteur selon la revendication 1, caractérisé par le fait que la charge imposée aux roues est déduite par le microprocesseur sur la base du signal de seulement un détecteur de charge sur les roues arrière.

3. Système de freinage pour véhicules à moteur selon les revendications 1 et 2, caractérisé par le fait que le microprocesseur est programmé de façon à signaler au conducteur si l'un des circuits hydrauliques des freins est défectueux, déduisant cette condition du fait que seulement l'une des pressions, $p_A$ ou $p_P$, est sensiblement égale à zéro.

4. Système de freinage pour véhicules à moteur selon les revendications 1 à 3, caractérisé par le fait que le microprocesseur réduit à une pression minimale $p_P$ l'effet de réduction du dispositif de réglage dans le cas où le circuit hydraulique des freins avant est défectueux, c'est-à-dire lorsque $p_A$ est sensiblement égale à zéro tandis que $p_P$ est différente de zéro.

5. Système de freinage pour véhicules à moteur selon les revendications 1 à 4, caractérisé par le fait que les détecteurs de charge consistent en des détecteurs de la position des roues par rapport à la caisse du véhicule, à partir des informations desquels le microprocesseur calcule la charge imposée aux roues, le système comportant des moyens par l'intermédiaire desquels le conducteur peut provoquer la mémorisation, par le microprocesseur, de la position des roues correspondant à une charge nulle.

6. Système de freinage pour véhicules à moteur selon les revendications 1 à 5, caractérisé par le fait que le microprocesseur détecte également le signal de la jauge de niveau de carburant dans le réservoir de carburant du véhicule à moteur, stocke ce signal dans la condition, stationnaire du véhicule conjointement aux signaux des détecteurs de charge et calcule lors du déplacement les variations pondérales dues à la consommation de carburant, sur la base des variations du niveau du carburant, et modifie en conséquence les paramètres mémorisés *a*, *b* et Q.

**Patentansprüche**

1. Bremssystem für Motofahrzeuge, das umfaßt:
einen Druckzylinder und Bremsen an jedem Vorder- und Hinterrad;
eine Anpassungsvorrichtung, um die Bremskraft auf die Vorder- bzw. Hinterräder zu verteilen;
ein Betätigungsorgan, das die Anpassungsvorrichtung schaltet;
einen Hydraulikkreis, der den Druckzylinder, die Bremsen und die Anpassungsvorrichtung mit einander verbindet;
einen Steuerkreis des Betätigungsorgans der Anpassungsvorrichtung, der einschließt: Fühlereinrichtungen für die Belastung der Räder und für die Drücke im Hydraulikkreis und eine elektronische Steuereinheit dadurch gekennzeichnet, daß die elektronische Steuereinheit (5) ein Mikroprozessor (7) ist und daß das System außerdem Mittel (16) umfaßt, um automatisch den Fühler (1, 2) für die Radbelastung nur dann zu aktivieren, wenn das Fahrzeug steht, um die Belastung des Fahrzeugs dem Mikroprozessor (7) mitzuteilen und ihn zu veranlassen, diesen Wert zu speichern, und der Mikroprozessor (7) vorgesehen ist, um das Betätigungsorgan zu überwachen, damit beim Bremsen der Druck $p_P$ des hinteren Kreises als eine Funktion des Drucks $p_A$ das vorderen Kreises so eingestellt wird, daß $p_P$ stets etwas niedriger ist als ein sich aus dem mathematischen Ausdruck

$$p_P = (p_A\alpha/\beta + Qb/2H\beta)^2 + p_A\alpha/\beta(Qa/H - p_A\alpha/\beta) - (p_A\alpha/\beta + Qb/2H\beta)$$

ergebender Wert, der im Mikroprozessor gespeichert wird, worin bedeuten:
Q = das Gesamtgewicht des Fahrzeugs;
a und b = die horizontalen Abstände des Schwerpunktes des Farhzeuggewichts von den vorderen bzw. hinteren Fahrzeugachsen;
H = die Höhe des Fahrzeugschwerpunktes über Grund;
α und β Bremskoeffizienten:
Q, a, b werden durch den Mikroprozessor (7) auf der Basis der Signale der Belastungsfühler (1, 2) bei Stillstand des Fahrzeugs errechnet und gespeichert.

**0 062 246**

2. Bremssystem nach Anspruch 1 dadurch gekennzeichnet, daß die Radbelastung durch den Mikroprozessor (7) auf der Basis des Signals nur eines Fühlers (2) an den Hinterrädern abgezogen wird.

3. Bremssystem nach den Ansprüchen 1 und 2 dadurch gekennzeichnet, daß der Mikroprozessor (7) so programmiert ist, daß er dem Fahrer ein Signal übermittelt, wenn einer der hydraulischen Kreise defekt ist, wobei er diesen Zustand aus der Tatsache schließt, daß nur einer der Drücke $p_A$ oder $p_P$ wesentlichen gleich null ist.

4. Bremssystem nach Anspruch 1—3 dadurch gekennzeichnet, daß der Mikroprozessor (7) den Verringerungseffekt der Anpassungsvorrichtung (9) auf einen minimalen Druck $p_P$ verringert, falls der vordere Hydraulikkreis ausfällt, d.h. wenn $p_A$ im wesentlichen gleich null ist, während $p_P$ sich von null unterscheidet.

5. Bremssystem nach Anspruch 1—4 dadurch gekennzeichnet, daß die Belastungsfühler (1—4) aus Fühlern bestehen, die die Stellung der Räder zum Fahrzeugchassis feststellen, und der Mikroprozessor (7) aus dieser Information die Belastung der Räder berechnet, und Mittel vorgesehen sind, durch die der Fahrer veranlassen kann, die Stellung des nicht belasteten Rades im Mikroprozessor zu speichern.

6. Bremssystem nach Anspruch 1—5 dadurch gekennzeichnet, daß der Mikroprozessor (7) auch das Signal des Kraftstoffanzeigers für den Kraftstofftank des Fahrzeugs zusammen mit den Signalen der Belastungsfühler (1, 2) aufnimmt und während der Fahrt die Gewichtsveränderungen durch den Kraftstoffverbrauch aufgrund der Änderungen des Kraftstoffniveaus errechnet und dementsprechend die gespeicherten Werte a, b und Q abändert.

FIG. 1

FIG. 2

FIG. 3

# FIG. 4

# FIG. 5